# EUROPÄISCHE PATENTSCHRIFT

(11) **EP 2 826 993 B1**
(45) Veröffentlichungstag und Bekanntmachung des Hinweises auf die Patenterteilung: **12.04.2017**
(21) Anmeldenummer: 13176822.8
(22) Anmeldetag: 17.07.2013
(51) Int. Cl.: B64D 15/20, F03D 80/40, F03D 17/00

(54) **Windenergieanlagenrotorblattenteisungsverfahren sowie Windenergieanlagenrotorblattenteisungssystem**
Wind energy plant rotor blade de-icing method and wind energy plant rotor blade de-icing system
Procédé de dégivrage des pales de rotor d'une installation éolienne et système de dégivrage des pales de rotor d'une installation éolienne

(43) Veröffentlichungstag der Anmeldung: 21.01.2015
(73) Patentinhaber: ADIOS Patent GmbH, 21129 Hamburg (DE)
(72) Erfinder: Bhatia, Ramon, 22549 Hamburg (DE); Mitschke, Robert, 22419 Hamburg (DE); Backs, Alexander, 21149 Hamburg (DE); Seebo, Fabian Timmo, 20259 Hamburg (DE); Spitzner, Jörg, 22559 Hamburg (DE)
(74) Vertreter: Hansen, Jochen

(56) Entgegenhaltungen:
- EP-A1- 2 026 160
- WO-A1-98/53200
- WO-A2-2007/129907
- GB-A- 2 477 338

## Beschreibung

Die Erfindung betrifft ein Windenergieanlagenrotorblattenteisungsverfahren mit einem an einem Rotorblatt angeordneten Windenergieanlagenrotorblattenteisungssystem, umfassend modulare elektrische Heizelemente, die zyklisch, wiederkehrend, diskontinuierlich und/oder kontinuierlich angesteuert werden, wobei mindestens ein modulares Heizelement mit einem Temperaturfühler und/oder elektrischem Widerstandsmesser versehen ist, wobei ein kontinuierliches Messen von Umweltmesswerten erfolgt und das Windenergieanlagenrotorblattenteisungssystem bei Erreichen von vorgegebenen Umweltmesswerten aktiviert wird.

Ferner betrifft die Erfindung ein Windenergieanlagenrotorblattheizsystem an einem Rotorblatt einer Windenergieanlage umfassend mindestens zwei Heizzonen mit modularen Heizelementen, wobei die modularen Heizelemente zyklisch und/oder kontinuierlich ansteuerbar sind, ein Ansteuerungssystem zur Aktivierung einzelner Heizzonen, Hauptheizelementen und/oder Hilfsheizelementen, Umwelt-, Umgebungs-, Regen-, Temperatur- und/oder Luftfeuchtigkeitssensoren zur Erfassung von Regelgrößen, wobei die Sensoren durch das Ansteuerungssystem ausgewertet werden.

Aus dem Stand der Technik sind unterschiedliche Anordnungen und Verfahren bekannt, um Windenergieanlagenrotorblätter zu enteisen bzw. eisfrei zu halten.

Aus der Druckschrift EP 1 017 580 B1 ist ein Enteisungs- und Vereisungsschutzssystem für Tragflächen eines Flugzeuges bekannt, wobei hierbei ein Laminat in Form eines dreischichtigen Aufbaus mit einer wärmeleitenden Schicht verwendet wird und diese als flexible Folien aus expandiertem Graphit vorliegt, wobei unterschiedliche Heizschichtdicken zu unterschiedlichen Heizleistungen führen. Die entsprechenden Module beginnen zu heizen, wenn ein Vereisungssensor eine mögliche Vereisung durch Erreichen von spezifischen Vereisungsbedingungen, nämlich eine Kombination aus Umgebungstemperatur, Feuchtigkeit und Taupunkt, meldet. Diesbezüglich erfolgt noch eine Überwachung der Heizelementetemperatur, wobei hierüber der Energieeintrag gesteuert wird.

Ferner ist aus der Druckschrift EP 1 846 293 B1 ein Heizsystem mit unterschiedlichen Heizzonen bekannt, wobei hierbei die Heizzonen zyklisch aktiviert werden, um sich bildendes Eis zu entfernen.

Weiter ist aus der Druckschrift EP 1 541 467 B1 ein für aerodynamische Oberflächen verfügbares Eisfreihaltesystem mit flexiblen Heizmodulen bekannt, wobei diese aus einem flexiblen Medium, Heizelementen, einem Mikroprozessor sowie einem Temperatur- und Vereisungssensor bestehen. Die entsprechenden Module beginnen zu heizen, wenn die jeweils zugeordneten Eissensoren Vereisung melden und die Temperatursensoren einen Schwellenwert unterschreiten.

Aus der Druckschrift WO 98/53200 A1 ist ein beheizbares Windenergieanlagenrotorblatt bekannt sowie ein Verfahren zum Heizen und Enteisen eines Windenergieanlagenrotorblatts. Hierbei werden elektrisch leitfähige Gewebe verwendet, um Eis zu entfernen bzw. einer Eisbildung entgegenzuwirken, wobei diese Gewebe auf oder in den Windenergieanlagenrotorblättern integriert sind.

Aus der Druckschrift WO 2007/129907 A2 ist eine Anordnung sowie ein Verfahren zur Kontrolle der Energieversorgung einer Oberflächenheizung an einer Windturbine bekannt, wobei kontrolliert eine Oberfläche schnee- oder eisfrei gehalten werden kann, wobei insbesondere auf eine hohe Energieeffizienz abgestellt wird.

Die Problematik der Vereisungsgefahr bzw. der Eisbildung von Windenergieanlagenrotorblättern tritt heutzutage immer mehr in den Vordergrund, da durch die Erschließung neuer Standorte, immer mehr Windparks in vereisungsgefährdeten Standorten gebaut werden.

Durch Eisbildung erfolgt eine Schädigung der Anlage durch Unwucht, die zu einer erheblichen Verkürzung der Lebensdauer einer Windenergieanlage führen. Zudem besteht die Gefahr des Eisabwurfes, wobei die Flugweiten bis zu 250 m betragen können, weshalb nach derzeitigem Stand die Anlagen bei Vereisung zwingend abgeschaltet werden müssen. Ein weiteres Problem der Eisbildung stellt den Verlust an Erträgen durch eisbedingte Abschaltungen dar, die im Jahr bis zu 20 % des Jahresenergieertrages erreichen können.

Die bisher im Stand der Technik bekannten Eissensoren arbeiten bei weitem nicht zuverlässig und signalisieren oftmals viel zu früh eine Eiswarnung, so dass die Windenergieanlage zu früh abgeschaltet werden muss.

Bei immer größeren Rotordurchmessern kommt immer häufiger vor, dass die äußeren Bereiche der Rotorblätter bereits in die Wolken eintauchen, in denen bereits Vereisungsbedingungen vorliegen, während am Eissensor, der im Stand der Technik bisher immer im Bereich der Gondel positioniert wurde, keine Eisbedingungen detektierbar sind.

Problematisch an den im Stand der Technik bekannten Enteisungssystemen ist somit insgesamt das schlechte bzw. falsch gesteuerte Ansprechverhalten zu sehen, da oftmals Eisbedingungen vorliegen, die noch nicht über Umweltmesssensoren an der Gondel detektierbar sind. Zudem ist der hohe Energieeinsatz für ein aus dem Stand der Technik bekanntes Enteisungssystem eines Windenergieanlagenrotorblattes ein wirtschaftlicher Negativaspekt.

Der vorliegenden Erfindung liegt die Aufgabe zugrunde, ein Windenergieanlagenrotorblattenteisungsverfahren sowie ein Windenergieanlagenrotorblattenteisungssystem aufzuzeigen, die eine energiesparende Enteisung, zuverlässige Eiserkennung bei nur sehr geringen aerodynamischen Beeinträchtigungen und ohne signifikante zusätzliche Lasteinträge gewährleisten.

Gelöst wird diese Aufgabe mit einem Windenergieanlagenrotorblattenteisungsverfahren gemäß dem Hauptanspruch sowie einem Windenergieanlagenrotorblattenteisungssystem gemäß dem nebengeordneten Anspruch.

Erfindungsgemäß ist es, dass bei Erreichen vorgegebener Umweltbedingungen zunächst ein Messzyklus gestartet wird, wobei ein modulares Heizelement angesteuert, dessen Temperaturverlauf (f = dT (t)) gemessen und mit einer Heizelement-spezifischen Temperaturverlaufsheizkurve ohne vorhandenes Eis (f0) verglichen wird, wobei bei verringertem Anstieg der Temperatur oder Ausbildung eines Plateaus / Haltebereichs im Verlauf des Temperaturanstieges das Windenergieanlagenrotorblattenteisungssystem zur Eisentfernung aktiviert wird und bei gleichem Anstieg und/oder Verlauf der Temperatur das Windenergieanlagenrotorblattenteisungssystem nicht aktiviert wird.

Nachdem das Heizelement mit Strom versorgt wird, erfolgt das Erwärmen aufgrund des elektrischen Widerstandes, wobei die Wärme auf die Außenseite der Rotorblattoberfläche übertragen wird. Für den Fall, dass kein Eis vorhanden ist, erfolgt eine Erwärmung gemäß einer Heizelement-spezifischen Temperaturkurve, die nahezu für fast alle Umgebungsbedingungen ähnlich ist. Für den Fall, dass Eis auf der Rotorblattoberfläche vorhanden ist, wird zunächst ein Teil der Wärmeenergie in das An- bzw. Abschmelzen des Eises verwendet, so dass eine andere Temperaturkurve mit Plateaus bzw. Anstelle der Temperaturmessung während des Messzyklusses kann der elektrische Widerstand als Regelgröße gemessen werden, wobei der Widerstandsverlauf mit einer Heizelement-spezifischen Widerstandsverlaufsheizkurve ohne vorhandenes Eis verglichen wird. Analog zu dem Verlauf der Temperatur existieren auch dort erkennbare Plateaus bzw. Haltebereiche im Verlauf des Widerstandes. Diese Plateaus bzw. Haltebereiche ergeben sich bedingt durch das Abschmelzen von vorhandenem Eis oberhalb des Heizelementes, so dass dieses als klares Indiz dafür gewertet werden kann, dass Eis vorhanden ist. Falls kein Eis vorhanden ist, sind die gemessene Widerstandsverlaufskurve und die Heizelement-spezifische Widerstandsverlaufskurve nahezu identisch.

Insgesamt ergibt sich somit die Möglichkeit direkt am Windenergieanlagenrotorblatt mittels der Heizelemente an sich in Verbindung mit einem Temperatursensor bzw. einem Widerstandssensor eine Eisdetektion durchzuführen, wobei dieses nahezu an jeder Stelle des Rotorblattes ohne aerodynamische Beeinträchtigungen und ohne signifikante zusätzliche Lasten zuverlässig und energiesparend erfolgen kann.

Die Messwerte von Umwelt-, Umgebungs-, Regen-, Temperatur- und/oder Luftfeuchtigkeitssensoren werden erfasst und zur Überprüfung des Erreichens von vorgegebenen Umweltbedingungen verwendet. Hierbei können die Sensoren an der Gondel, dem Turm und/oder an dem Rotorblatt selbst befestigt bzw. angeordnet sein, wobei bei Anordnung an dem Rotorblatt die Sensoren an der Rotorblattspitze bevorzugt vorgesehen werden.

Weiter wird eine Datenbank während des Betriebes der Windenergieanlage anlagenspezifisch erstellt und/oder überarbeitet, wobei in dieser Datenbank die Umweltbedingungen abgespeichert werden, die bei erkanntem Eis während eines Messzyklusses vorgelegen haben. Auf diese Art und Weise wird ein anlagenspezifisches Vereisungsprofil unter Heranziehung der Umweltbedingungen realisiert bzw. verfeinert, so dass ein entsprechender Messzyklus wesentlich genauer gestartet werden kann.

Bei Erreichen von Umweltbedingungen, die bereits mit einer Eisdetektion in der Datenbank hinterlegt sind, erfolgt bereits während der Durchführung des Messzyklusses die Aktivierung des Windenergieanlagenrotorblattenteisungssystems. Bei fehlender Detektion von Eis während des Messzyklusses werden die in der Datenbank erfassten Umweltbedingungen mit vorhandenem Eis korrigiert und es erfolgt ein unmittelbares Abschalten des Windenergieanlagenrotorblattenteisungssystems.

Bei Aktivierung des Windenergieanlagenrotorblattenteisungssystem erfolgt zunächst die Aktivierung von um ein großflächiges Heizelement angeordneten Hilfsheizelementen der Heizzonen. Hierbei wird das gebildete Eis oberhalb der Hilfsheizelemente zunächst geschmolzen, wodurch sich kleinere Eisflächen über den Hauptheizelementen ausbilden.

Nach der Aktivierung der Hilfsheizelemente erfolgt ein Aktivieren der Hauptheizelemente, wodurch die Eisflächen über den Hauptheizelementen angelöst und durch die Zentrifugalkraft abgeschleudert werden. Da diese Eisflächen nur eine geringe Fläche aufweisen, stellen sie keine Gefahr für die Umwelt dar. Dadurch, dass die Größe der Eisflächen über den Hauptheizelementen geringer ausgebildet ist, lösen sich diese deutlich leichter ab.

Die Hilfsheizelemente bleiben kontinuierlich aktiviert, solange während eines Messzyklusses Eis detektiert wird.

Die Hauptheizelemente werden zyklisch oder diskontinuierlich aktiviert, solange die Hilfsheizelemente aktiviert sind.

Der Messzyklus wird auf einem kleinen Heizelement oder einem Heizelement an der Blattspitze gefahren, wodurch bereits frühzeitig Eis detektiert werden kann, insbesondere beim Eintauchen der Rotorblattspitze in die Wolken kann Eis detektiert werden.

Weiter können auch alle Heizelemente mit einer entsprechenden Eissensorik ausgestattet werden, wobei ausgehend von der Blattspitze die Heizelemente nacheinander aktiviert werden. Hierbei wird das nachfolgende weiter innen angeordnete Heizelement nur dann aktiviert, wenn das zuvor aktivierte weiter außen angeordnete Heizelement tatsächlich Eis detektiert hat. Auf diese Art und Weise muss nicht das komplette Enteisungssystem aktiviert werden, sondern es erfolgt lediglich eine abschnittsweise Aktivierung.

Bei abschnittsweiser Eisdetektion können diese Werte ebenfalls in einer Datenbank hinterlegt werden, wodurch das System noch effizienter arbeiten kann.

Die Steuerung des Systems regelt somit, wann welches Heizelement wie lange und mit welcher Leistung heizt. Die Heizdauer und zugeführte Leistung wird anhand von verschiedenen Parametern, wie der Außentemperatur, der Windgeschwindigkeit sowie der Luftfeuchtigkeit und dergleichen in Kombination mit einem spezifischen Heizelementekennfeld bestimmt.

Anordnungsgemäß umfasst das Windenergieanlagenrotorblattheizsystem an einem Rotorblatt einer Windenergieanlage mindestens zwei Heizzonen mit modularen Heizelementen, wobei die modularen Heizelemente zyklisch und/oder kontinuierlich ansteuerbar sind, ein Ansteuerungssystem zur Aktivierung einzelner Heizzonen, Hauptheizelementen und/oder Hilfsheizelementen, Umwelt-, Umgebungs-, Regen-, Temperatur- und/oder Luftfeuchtigkeitssensoren zur Erfassung von Regelgrößen, wobei die Sensoren durch das Ansteuerungssystem ausgewertet werden, wobei ein großflächiges Hauptheizelement pro Heizzone vorgesehen ist und um dieses Hauptheizelement Hilfsheizelemente angeordnet sind.

Die Heizzonen bzw. die einzelnen Heizfelder sind derart angeordnet, dass diese nur im Bereich der Staupunktwanderung vorliegen. Es liegen somit große Heizzonen bestehend aus einem Hauptheizelement, das diskontinuierlich und/oder zyklisch ansteuerbar ist und aus Hilfsheizelementen, die kontinuierlich ansteuerbar sind.

Die Hilfsheizelemente umrahmen / umschließen das Hauptheizelement vollständig. Im Bereich der Hilfsheizelemente wird keine Eisbildung zugelassen.

Ein bevorzugt an der Blattspitze vorgesehenes Heizelement ist in einer Sensorheizzone vorgesehen.

Die Heizzonen sind flach ausgebildet, um die Aerodynamik nicht negativ zu beeinträchtigen. Sämtliche Zuleitungen werden durch Bohrungen geführt, die sich an einer nicht kritischen Position befinden, so dass die Struktur des Windenergieanlagenrotorblattes nicht geschwächt wird. Die Kontaktierung der einzelnen Heizelemente erfolgt in einer bevorzugten Ausführungsform durch flache Metallbänder.

Die Hilfsheizelemente und/oder die Hauptheizelemente sind nahe oder an der Rotorblattoberfläche angeordnet, aufgeklebt oder einlaminiert.

Die Haupt- und/oder Hilfsheizelemente bestehen aus einem Heizlack mit Graphiten, Kohlenstoff in Mikro- und/oder Nanostrukturen.

Die Hilfs- und/oder Hauptheizelemente sind mit einem Blitzschutzmesh abgedeckt, wobei das Blitzschutzmesh an der vorhandenen Erdung des vorhandenen Blitzschutzes angeschlossen ist, wobei bevorzugt der Widerstand des Heizelemente-Blitzschutzmesh gering ausgebildet ist, wobei jedoch der eigentliche Blitzschutz der Windenergieanlage weiterhin durch einen Blitz präferiert bleibt.

Der Aufbau des Heizsystems stellt sich wie folgt dar: Auf die Rotorblattoberfläche wird das Heizmaterial mittels einer Trägerfolie aufgebracht, wobei dieses mit einer Isolierfolie und anschließend mit dem Blitzschutzmesh abgedeckt wird. Anschließend erfolgt die Versiegelung mit einer Erosionsschutzfolie.

Die Umwelt-, Umgebungs-, Regen-, Temperatur- und/oder Luftfeuchtigkeitssensoren sind an der Windenergieanlagengondel, an dem Windenergieanlagenturm, dem Windenergieanlagenrotorblatt und/oder an der Spitze des Windenergieanlagenrotorblattes angeordnet.

Die zu übertragenden Daten von Sensoren werden bevorzugt über eine Funkstrecke übermittelt. Die Energieübertragung erfolgt bevorzugt über Schleifringe in der Nabe.

Zur Fertigung des Enteisungssystems kann eine Vorfertigung erfolgen, wobei einseitig klebende Folien mit einer Heizlackbeschichtung und Kupferbändern für die Kontaktierung versehen werden, die dann mit doppelseitig klebender Folie mit dem Blitzschutzmesh auf der einen Seite auf den Heizlack mit der anderen Seite aufgeklebt werden. Auf die Heizfolien wird noch abschließend eine Erosionsschutzfolie als Opferschicht aufgebracht, wobei diese erst bevorzugt bei der Montage auf dem Rotorblatt angebracht wird.

Die Montage kann sowohl ab Werk erfolgen oder nachträglich am hängenden Rotorblatt. Zur Anbringung an das Rotorblatt wird das vorgefertigte Enteisungssystem in mehreren in Spannweitenrichtung unterteilten Abschnitten an das Rotorblatt geklebt. Die Kontaktbänder werden zu einer Bohrung am Blatt geführt, wo diese mit entsprechenden internen Leiterkabeln, die zur Rotorblattnabe führen, verbunden werden.

Nachfolgend werden Ausführungsbeispiele der Erfindung anhand der beiliegenden Zeichnungen detailliert beschrieben.

Darin zeigen:
- Fig. 1: eine schematische Darstellung einer Windenergieanlage mit drei Rotorblättern, an deren Vorderkante ein Heizsystem zur Enteisung angeordnet ist;
- Fig. 2: eine schematische Darstellung der Regelung und Steuerung für ein Heizsystem;
- Fig. 3 und 4: schematische Darstellungen eines Rotorblattes aus zwei Ansichten mit dem Heizsystem;
- Fig. 5: eine schematische Darstellung des Heizsystems an einem Rotorblatt, wobei ein Teilabschnitt zur besseren Verdeutlichung der Erfindung vergrößert dargestellt ist und
- Fig. 6: ein Diagramm der Temperaturveränderung im zeitlichen Verlauf für einen Temperatursensor eines Heizelementes mit und ohne Eis.

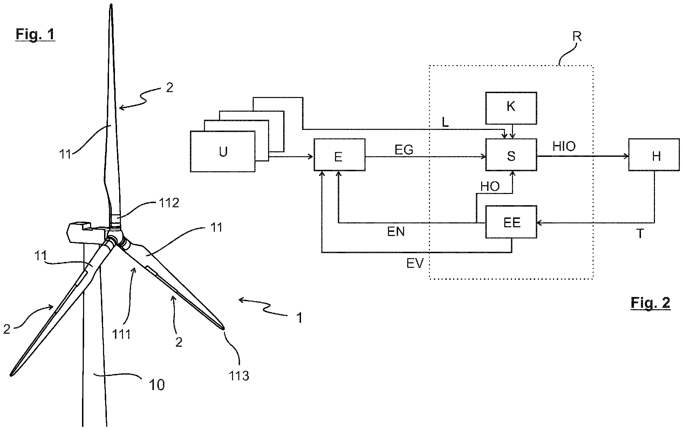

Fig. 1 zeigt eine schematische Darstellung einer Windenergieanlage 1 bestehend aus einem Turm und einer darauf angeordneten Gondel, an der drei Rotorblätter 11 angeordnet sind, wobei an deren Vorderkanten 111 ein Heizsystem 2 zur Enteisung angeordnet ist.

In den entscheidenden Bereichen des Rotorblattes, in denen eine Vereisung generell möglich ist, sind einzelne elektrische Heizelemente entlang der longitudinalen Ausdehnung des Rotorblattes 11 angeordnet, die bei Bedarf Eis von der Oberfläche des Rotorblattes 11 entfernen bzw. das Rotorblatt eisfrei hält.

Im Weiteren werden für gleiche Elemente die gleichen Bezugszeichen wie in Fig. 1 verwendet. Zu dem prinzipiellen Funktionsprinzip bzw. Ablauf wird auf Fig. 1 verwiesen.

In Fig. 2 ist eine schematische Darstellung der Regelung R und Steuerung S für ein Heizsystem 2 dargestellt.

Hierbei wird eine kognitive Eisvorhersage und Eiserkennung realisiert. Es werden verschiedene Parameter, nämlich die Umwelteinflüsse / Umweltmesswerte U, wie Temperatur, Luftfeuchtigkeit, Taupunkt, Windgeschwindigkeit und dergleichen erfasst und zu einem Gesamtbild zusammengefügt, wobei diese Messwerte mit einer entsprechenden Kennung Eis vorhanden EV bzw. kein Eis vorhanden, negative Rückmeldung EN versehen werden, so dass auf Grundlage dieser Messergebnisse eine Prognose für das Vorhandensein von Eis ausgegeben wird.

Die kognitive Eisprognose E ist lernfähig, da sie Ähnlichkeiten erkennen kann und somit auf leichte Witterungsabweichungen U gleichwohl richtig mit einer Eisvorhersage reagieren kann. Bei ähnlichen Gesamtbildern wird Eis vorhergesagt, wobei über eine Rückmeldung gemeldet wird, ob tatsächlich Eis vorliegt. Bei Vereisungsgefahr erfolgt eine positive Rückmeldung EG; falls kein Eis vorhanden ist, erfolgt die negative Rückmeldung EN. Die Überprüfung, ob Eis vorhanden ist oder nicht, erfolgt über die Eiserkennung EE, die den zeitlichen Temperaturverlauf T bzw. dT der Heizelemente H erfasst und auswertet.

Die Steuerung S der Heizfelder H gibt neben den Befehlen Heizfelder an- und ausschalten HIO auch noch an, wann welches Heizelement wie lange und mit welcher Leistung heizt. Die Heizdauer und zugeführte Leistung L wird anhand von den Umwelteinflüssen U und einem Kennfeld K bestimmt und geregelt.

Sollte nach dem Anfahren des Heizsystems H festgestellt werden, dass die Eisprognose falsch gewesen ist, wobei dies durch die Eiserkennung EE erkannt wird, erfolgt das Signal zum Abschalten der Heizfelder HO, so dass die Heizfelder alle deaktiviert werden.

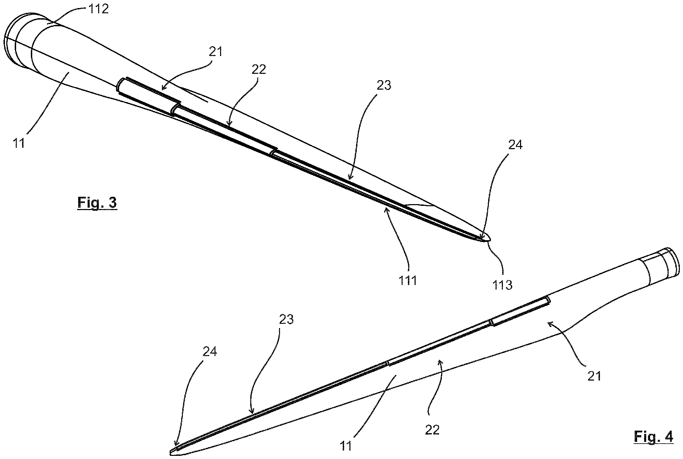

Fig. 3 und 4 zeigen schematische Darstellungen eines Rotorblattes 11 aus zwei Ansichten mit dem Heizsystem 2 an der Vorderkante 111. Ausgehend von der Aufnahme des Rotorblattes 112 sind drei Heizzonen, nämlich die erste Heizzone 21, die zweite Heizzone 22 und die dritte Heizzone 23 angeordnet. An der Blattspitze 112 ist zusätzlich ein Sensorheizelement 24 vorgesehen, das lediglich eine sehr kleine Fläche beheizt.

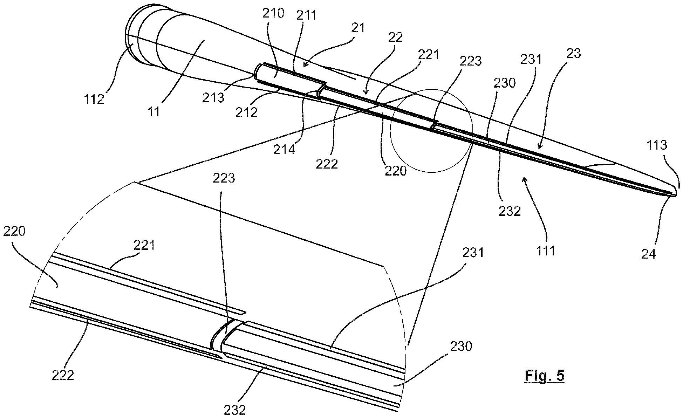

Fig. 5 zeigt eine schematische Darstellung des Heizsystems 2 an einem Rotorblatt 11, wobei ein Teilabschnitt zur besseren Verdeutlichung der Erfindung vergrößert dargestellt ist. In dieser Darstellung sind die Details des Heizsystems 2 dargestellt.

Zur besseren Verdeutlichung des Heizsystems sind in dieser Figur die Details des Heizsystems 2 dargestellt. Das Heizsystem 2 besteht wie bereits in den Fig. 3 und 4 gezeigt, aus drei Heizzonen 21, 22, 23, die eine präferierte Ausgestaltung darstellen. Eine Ausgestaltung mit nur einer 21 oder zwei 21, 22 Heizzonen ist gleichwohl auch möglich und von der Länge des Rotorblattes 11 abhängig. Selbstverständlich sind auch mehr als drei Heizzonen möglich.

Jede Heizzone 21, 22, 23 besteht aus einem Hauptheizelement 210, 220, 230, das von mehreren Hilfsheizelementen umrandet wird.

Die erste Heizzone 21 umfasst somit das erste Hauptheizelement 210, das von einem ersten oberen Hilfsheizelement 211 auf der Oberseite begrenzt wird, einem ersten unteren Hilfsheizelement 212 auf der Unterseite begrenzt wird, einem Anfangshilfsheizelement 213 auf der Seite der Rotorblattaufnahme 113 begrenzt wird und einem ersten Zwischenhilfsheizelement 214 zu dem benachbarten nächsten Hauptheizelement 220 begrenzt wird.

Die zweite Heizzone 22 umfasst somit das zweite Hauptheizelement 220, das von einem zweiten oberen Hilfsheizelement 221 auf der Oberseite begrenzt wird, einem zweiten unteren Hilfsheizelement 222 auf der Unterseite begrenzt wird, dem ersten Zwischenhilfsheizelement 214 auf der Seite der Rotorblattaufnahme 113 und zum ersten Hauptheizelement 210 begrenzt wird und einem zweiten Zwischenhilfsheizelement 223 zu dem benachbarten nächsten Hauptheizelement 230 begrenzt wird.

Die dritte Heizzone 23 umfasst somit das dritte Hauptheizelement 230, das von einem dritten oberen Hilfsheizelement 231 auf der Oberseite begrenzt wird, einem dritten unteren Hilfsheizelement 232 auf der Unterseite begrenzt wird, dem zweiten Zwischenhilfsheizelement 223 auf der Seite der Rotorblattaufnahme 113 und zum zweiten Hauptheizelement 220 begrenzt wird und einem Sensorheizelement 24 oder alternativ einem dritten, hier nicht dargestellten Zwischenhilfsheizelement begrenzt wird.

An der Blattspitze 113 ist in der Sensorheizzone 24 das Sensorheizelement 24 angeordnet. Dieses Sensorheizelement 24 wird bevorzugt zur Ausführung des beschriebenen Messzyklusses angesteuert. Der Messzyklus wird gestartet, wenn die Umweltbedingungen entsprechend vorliegen und eine Detektion auf vorliegendes Eis bzw. eine Überprüfung der Eisprognose durchgeführt werden soll.

Die die Hauptheizelement 210, 220, 230 umschließenden Hilfsheizelemente 211, 212, 213, 214, 221, 222, 223, 231, 232 sind in dieser Figur einzeln dargestellt, wobei dies eine mögliche Ausgestaltung darstellt, präferiert wird jedoch die vollständig umlaufende Anordnung der Hilfsheizelemente.

Die Hilfsheizelemente 211, 212, 213, 214, 221, 222, 223, 231, 232 sind kontinuierlich bei Eisgefahr elektrisch angesteuert, so dass sich in diesen Bereich kein Eis bilden kann. Die Hauptheizelemente hingegen werden zyklisch angesteuert, um so gebildetes Eis durch Anschmelzen von der Oberfläche zu entfernen.

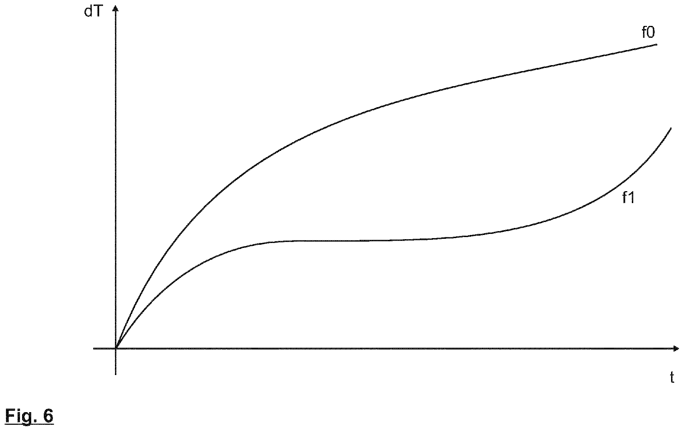

In Fig. 6 ist ein Diagramm der Temperaturveränderung dT im zeitlichen Verlauf für einen Temperatursensor eines Heizelementes 210, 211, 212, 213, 214, 220, 221, 222, 223, 230, 231, 232, 24 mit Eis f1 und ohne Eis f0 dargestellt.

Die obere Kurve f0 stellt den zeitlichen Verlauf der Temperatur ohne Eis auf der Oberfläche des Heizelementes dar. Die untere Kurve f1 stellt den zeitlichen Verlauf der Temperatur mit Eis auf der Oberfläche des Heizelementes dar, wobei das Eis nach einer gewissen Zeit t bei Erreichen einer gewissen Temperatur T beginnt anzuschmelzen wofür Energie notwendig ist und diese Energieentnahme einen veränderten Temperaturanstieg dT in dem Heizelement bewirkt. Es bildet sich eine Haltestufe bzw. ein Plateau aus, wobei in diesem Bereich elektrische Energie in das Eisabschmelzen überführt wird und nicht zur Erwärmung des Heizelementes an sich genutzt wird.

Alternativ zur Temperaturüberwachung kann analog der Widerstand des elektrischen Heizelementes detektiert werden und mit einer spezifischen Widerstandsverlaufskurve analog zum Temperaturvergleich verglichen werden, um so eine Eisdetektion durchzuführen. Die Eisdetektion ist somit eine Überprüfung auf Energieentzug durch Änderung des Aggregatzustandes von fest in flüssig bzw. gasförmig des gefrorenen Wassers.

### Bezugszeichenliste

- 1: Windenergieanlage
- 10: Turm
- 11: Rotorblatt
- 111: Vorderkante
- 112: Blattspitze
- 113: Aufnahme

- 2: Heizsystem
- 21: erste Heizzone
- 210: erstes Hauptheizelement
- 211: erstes oberes Hilfsheizelement
- 212: erstes unteres Hilfsheizelement
- 213: Anfangshilfsheizelement
- 214: erstes Zwischenhilfsheizelement
- 22: zweite Heizzone
- 220: zweites Hauptheizelement
- 221: zweites oberes Hilfsheizelement
- 222: zweites unteres Hilfsheizelement
- 223: zweite Zwischenhilfsheizelement
- 23: dritte Heizzone
- 230: drittes Hauptheizelement
- 231: drittes oberes Hilfsheizelement
- 232: drittes unteres Hilfsheizelement
- 24: Sensorheizzone, Sensorheizelement

- EE: Eiserkennung
- EG: Vereisungsgefahr, positive Rückmeldung
- EN: kein Eis vorhanden, negative Rückmeldung
- EV: Eis vorhanden
- E: kognitive Eisprognose
- f0: Funktion der Temperatur über die Zeit ohne Eis
- f1: Funktion der Temperatur über die Zeit mit Eis
- H: Heizfelder (Heizelemente des Heizsystems)
- HIO: Heizfelder an oder ausschalten
- HO: Signal zum Abschalten der Heizfelder
- K: Kennfeld
- L: bestimmt die Leistung
- R: Regelung
- S: Steuerung
- t: Zeit
- dT: Temperaturänderung
- T: Temperaturverlauf
- U: Umwelteinfluss, Umweltmesswert, Umweltbedingungen

## Patentansprüche

1. Windenergieanlagenrotorblattenteisungsverfahren mit einem an einem Rotorblatt (11) angeordneten Windenergieanlagenrotorblattenteisungssystem, umfassend modulare elektrische Heizelemente (210, 211, 212, 213, 214, 220, 221, 222, 223, 230, 231, 232, 24), die zyklisch, wiederkehrend, diskontinuierlich und/oder kontinuierlich angesteuert werden, wobei mindestens ein modulares Heizelement (210, 211, 212, 213, 214, 220, 221, 222, 223, 230, 231, 232, 24) mit einem Temperaturfühler und/oder elektrischem Widerstandsmesser versehen ist,
wobei ein kontinuierliches Messen von Umweltmesswerten (U) erfolgt und
das Windenergieanlagenrotorblattenteisungssystem bei Erreichen von vorgegebenen Umweltmesswerten (U) aktiviert wird,
**dadurch gekennzeichnet, dass**
bei Erreichen vorgegebener Umweltbedingungen (U) zunächst ein Messzyklus gestartet wird, wobei ein modulares Heizelement (210, 211, 212, 213, 214, 220, 221, 222, 223, 230, 231, 232, 24) angesteuert, dessen Temperaturverlauf (f = dT (t)) gemessen und mit einer Heizelement-spezifischen Temperaturverlaufsheizkurve ohne vorhandenes Eis (f0) verglichen wird,
wobei
bei verringertem Anstieg der Temperatur (f1) oder Ausbildung eines Plateaus / Haltebereichs im Verlauf des Temperaturanstieges das Windenergieanlagenrotorblattenteisungssystem zur Eisentfernung aktiviert wird
und
bei gleichem Anstieg und/oder Verlauf der Temperatur (f0) das Windenergieanlagenrotorblattenteisungssystem nicht aktiviert wird.

2. Windenergieanlagenrotorblattenteisungsverfahren nach Anspruch 1,
**dadurch gekennzeichnet, dass**
beim Messzyklus anstelle der Temperatur (T) der elektrische Widerstand als Regelgröße gemessen wird, wobei der Widerstandsverlauf mit einer Heizelement-spezifischen Widerstandsverlaufsheizkurve ohne vorhandenes Eis verglichen wird.

3. Windenergieanlagenrotorblattenteisungsverfahren nach Anspruch 1,
**dadurch gekennzeichnet, dass**
Messwerte von Umwelt-, Umgebungs-, Regen-, Temperatur- und/oder Luftfeuchtigkeitssensoren erfasst und zur Überprüfung des Erreichens von vorgegebenen Umweltbedingungen (U) verwendet werden.

4. Windenergieanlagenrotorblattenteisungsverfahren nach Anspruch 1 oder 2,
**dadurch gekennzeichnet, dass**
eine Datenbank während des Betriebes anlagenspezifisch erstellt und/oder überarbeitet wird, wobei in dieser Datenbank die Umweltbedingungen (U) abgespeichert werden, die bei erkanntem Eis während eines Messzyklusses vorgelegen haben.

5. Windenergieanlagenrotorblattenteisungsverfahren nach Anspruch 3,
**dadurch gekennzeichnet, dass**
bei Erreichen von Umweltbedingungen (U), die bereits mit einer Eisdetektion in der Datenbank hinterlegt sind, bereits während der Durchführung des Messzyklusses die Aktivierung des Windenergieanlagenrotorblattenteisungssystems erfolgt.

6. Windenergieanlagenrotorblattenteisungsverfahren nach Anspruch 4,
**dadurch gekennzeichnet, dass**
bei fehlender Detektion von Eis während des Messzyklusses die in der Datenbank erfassten Umweltbedingungen (U) mit vorhandenem Eis korrigiert werden und ein unmittelbares Abschalten des Windenergieanlagenrotorblattenteisungssystem erfolgt.

7. Windenergieanlagenrotorblattenteisungsverfahren nach einem der vorangehenden Ansprüche,
**dadurch gekennzeichnet, dass**
bei Aktivierung des Windenergieanlagenrotorblattenteisungssystem zunächst die Aktivierung von um ein großflächiges Hauptheizelement (210, 220, 230) angeordneten Hilfsheizelementen (211, 212, 213, 214, 221, 222, 223, 231, 232) der Heizzonen (21, 22, 23, 24) erfolgt.

8. Windenergieanlagenrotorblattenteisungsverfahren nach Anspruch 6,
**dadurch gekennzeichnet, dass**
nach der Aktivierung der Hilfsheizelemente (211, 212, 213, 214, 221, 222, 223, 231, 232) ein Aktivieren der Hauptheizelemente (210, 220, 230) erfolgt.

9. Windenergieanlagenrotorblattenteisungsverfahren nach Anspruch 6 oder 7,
**dadurch gekennzeichnet, dass**
die Hilfsheizelemente (211, 212, 213, 214, 221, 222, 223, 231, 232) kontinuierlich aktiviert bleiben, solange während eines Messzyklusses Eis detektiert wird.

10. Windenergieanlagenrotorblattenteisungsverfahren nach Anspruch 7 oder 8,
**dadurch gekennzeichnet, dass**
die Hauptheizelemente (210, 220, 230) zyklisch oder diskontinuierlich aktiviert werden, solange die Hilfsheizelemente (211, 212, 213, 214, 221, 222, 223, 231, 232) aktiviert sind.

11. Windenergieanlagenrotorblattenteisungsverfahren nach einem der vorangehenden Ansprüche,
**dadurch gekennzeichnet, dass**
der Messzyklus auf einem kleinen Heizelement (211, 212, 213, 214, 221, 222, 223, 231, 232) oder einem Heizelement (24, 230, 231, 232) an der Blattspitze (113) gefahren wird.

12. Windenergieanlagenrotorblattheizsystem an einem Rotorblatt (11) einer Windenergieanlage (1)
umfassend
mindestens zwei Heizzonen (21, 22, 23) mit modularen Heizelementen (210, 211, 212, 213, 214, 220, 221, 222, 223, 230, 231, 232, 24), wobei die modularen Heizelemente (210, 211, 212, 213, 214, 220, 221, 222, 223, 230, 231, 232, 24) zyklisch und/oder kontinuierlich ansteuerbar sind, ein Ansteuerungssystem zur Aktivierung einzelner Heizzonen (21, 22, 23), Hauptheizelementen (210, 220, 230) und/oder Hilfsheizelementen (211,212,213,214,221,222,223,231,232),
Umwelt-, Umgebungs-, Regen-, Temperatur- und/oder Luftfeuchtigkeitssensoren zur Erfassung von Regelgrößen, wobei die Sensoren durch das Ansteuerungssystem ausgewertet werden,
**wobei**
ein großflächiges Hauptheizelement (210, 220, 230) pro Heizzone vorgesehen ist, wobei um dieses Hauptheizelement (210, 220, 230) Hilfsheizelemente (211, 212, 213, 214, 221, 222, 223, 231, 232) angeordnet sind,
**dadurch gekennzeichnet, dass**
die modularen Heizelemente (210, 211, 212, 213, 214, 220, 221, 222, 223, 230, 231, 232, 24) aus einem auf einer Trägerfolie aufgebrachten Heizmaterial bestehen
und
das Heizmaterial eine Heizlackbeschichtung ist, die mit Kupferbändern für die Kontaktierung versehen ist.

13. Windenergieanlagenrotorblattheizsystem nach Anspruch 12,
**dadurch gekennzeichnet, dass**
das Heizmaterial auf der Trägerfolie mit einer doppelseitig klebenden Folie abgedeckt ist und darauf ein Blitzschutzmesh angeordnet ist.

14. Windenergieanlagenrotorblattheizsystem nach Anspruch 13,
**dadurch gekennzeichnet, dass**
das auf dem Blitzschutzmesh eine Erosionsschutzfolie vorgesehen ist.

15. Windenergieanlagenrotorblattheizsystem nach Anspruch 12, 13 oder 14,
**dadurch gekennzeichnet, dass**
der Heizlack mit Graphiten, Kohlenstoff in Mikro- und/oder Nanostrukturen ausgebildet ist.

## Claims

1. Method for de-icing a wind turbine rotor blade, comprising a wind turbine rotor blade de-icing system arranged on a rotor blade (11), said system comprising modular electrical heating elements (210, 211, 212, 213, 214, 220, 221, 222, 223, 230, 231, 232, 24), which are actuated in a cyclical, recurring, intermittent and/or continuous manner, at least one modular heating element (210, 211, 212, 213, 214, 220, 221, 222, 223, 230, 231, 232, 24) being provided with a temperature sensor and/or electrical ohmmeter,
continuous measurement of measured environmental values (U) being carried out and
the wind turbine rotor blade de-icing system being activated when predetermined measured environmental values (U) are reached,
**characterised in that**
when predetermined environmental conditions (U) are reached, first a measurement cycle is started, a modular heating element (210, 211, 212, 213, 214, 220, 221, 222, 223, 230, 231, 232, 24) being actuated, the temperature profile (f = dT (t)) of which is measured and compared with a heating-element-specific temperature profile heating curve without ice (f0), the wind turbine rotor blade de-icing system being activated for ice removal in the case of a reduced rise in temperature (f1) or the formation of a plateau/holding range in the course of the rise in temperature, and
the wind turbine rotor blade de-icing system not being activated in the case of an equal increase and/or temperature profile (f0).

2. Method for de-icing a wind turbine rotor blade according to claim 1,
**characterised in that**,
during the measurement cycle, instead of the temperature (T), the electrical resistance is measured as a control variable, the resistance profile being compared with a heating-element-specific resistance profile heating curve without ice.

3. Method for de-icing a wind turbine rotor blade according to claim 1,
**characterised in that**
data from environmental, ambient, rain, temperature and/or atmospheric humidity sensors are recorded and are used to check that predetermined environmental conditions (U) have been reached.

4. Method for de-icing a wind turbine rotor blade according to either claim 1 or claim 2,
**characterised in that**,
during operation, a database is created and/or updated in a turbine-specific manner, the environmental conditions (U) that existed during a measurement cycle in the event of ice being detected being stored in this database.

5. Method for de-icing a wind turbine rotor blade according to claim 3,
**characterised in that**,
when environmental conditions (U) which are already recorded in the database in the event of ice detection are reached, the wind turbine rotor blade de-icing system is already activated when the measurement cycle is carried out.

6. Method for de-icing a wind turbine rotor blade according to claim 4,
**characterised in that**,
when ice is not detected during the measurement cycle, the environmental conditions (U) recorded in the database when ice is present are corrected and an immediate shutdown of the wind turbine rotor blade de-icing system occurs.

7. Method for de-icing a wind turbine rotor blade according to any of the preceding claims,
**characterised in that**
first, when the wind turbine rotor blade de-icing system is activated, auxiliary heating elements (211, 212, 213, 214, 221, 222, 223, 231, 232) of the heating zones (21, 22, 23, 24), which auxiliary heating elements are arranged around a large-area main heating element (210, 220, 230), are activated.

8. Method for de-icing a wind turbine rotor blade according to claim 6,
**characterised in that**,
after the auxiliary heating elements (211, 212, 213, 214, 221, 222, 223, 231, 232) are activated, the main heating elements (210, 220, 230) are activated.

9. Method for de-icing a wind turbine rotor blade according to either claim 6 or claim 7,
**characterised in that**
the auxiliary heating elements (211, 212, 213, 214, 221, 222, 223, 231, 232) remain continuously activated as long as ice is detected during a measurement cycle.

10. Method for de-icing a wind turbine rotor blade according to either claim 7 or claim 8,
**characterised in that**
the main heating elements (210, 220, 230) are activated cyclically or intermittently as long as the auxiliary heating elements (211, 212, 213, 214, 221, 222, 223, 231, 232) are activated.

11. Method for de-icing a wind turbine rotor blade according to any of the preceding claims,
**characterised in that**
the measurement cycle is carried out on a small heating element (211, 212, 213, 214, 221, 222, 223, 231, 232) or a heating element (24, 230, 231, 232) on the blade tip (113).

12. System for heating a wind turbine rotor blade, on a rotor blade (11) of a wind turbine (1),
comprising
at least two heating zones (21, 22, 23) having modular heating elements (210, 211, 212, 213, 214, 220, 221, 222, 223, 230, 231, 232, 24), it being possible to actuate the modular heating elements (210, 211, 212, 213, 214, 220, 221, 222, 223, 230, 231, 232, 24) cyclically and/or continuously,
an actuating system for activating individual heating zones (21, 22, 23), main heating elements (210, 220, 230) and/or auxiliary heating elements (211, 212, 213, 214, 221, 222, 223, 231, 232),
and environmental, ambient, rain, temperature and/or atmospheric humidity sensors for detecting control variables, the sensors being evaluated by the actuating system,
a large-area main heating element (210, 220, 230) being provided per heating zone, auxiliary heating elements (211, 212, 213, 214, 221, 222, 223, 231, 232) being arranged around this main heating element (210, 220, 230),
**characterised in that** the modular heating elements (210, 211, 212, 213, 214, 220, 221, 222, 223, 230, 231, 232, 24) consist of a heating material applied to a carrier film
and
the heating material is a heating coating that is provided with copper bands for contacting.

13. System for heating a wind turbine rotor blade according to claim 12,
**characterised in that**
the heating material on the carrier film is covered by a double-sided adhesive film and a lightning-protection mesh is arranged thereon.

14. System for heating a wind turbine rotor blade according to claim 13,
**characterised in that**
an erosion-protection film is provided on the lightning-protection mesh.

15. System for heating a wind turbine rotor blade according to claim 12, claim 13 or claim 14,
**characterised in that**
the heating coating is formed by graphite and carbon in microstructures and/or nanostructures.

## Revendications

1. Procédé de dégivrage de pales de rotor d'une installation à énergie éolienne avec un système de dégivrage de pales de rotor d'une installation à énergie éolienne disposé sur une pale de rotor (11), lequel système comprend des éléments chauffants électriques modulaires (210, 211, 212, 213, 214, 220, 221, 222, 223, 230, 231, 232, 24) qui sont commandés de manière cyclique, périodique, intermittente et/ou continue, au moins un élément chauffant modulaire (210, 211, 212, 213, 214, 220, 221, 222, 223, 230, 231, 232, 24) est muni d'un capteur de température et/ou d'un capteur de mesure de la résistance électrique,
une mesure en continu de valeurs environnementales (U) étant réalisée, et
le système de dégivrage de pales de rotor d'une installation à énergie éolienne étant activé lorsque des valeurs environnementales prédéterminées (U) sont atteintes, **caractérisé en ce que**
lorsque des conditions environnementales prédéterminées (U) sont atteintes, un cycle de mesure est tout d'abord démarré, un élément chauffant modulaire (210, 211, 212, 213, 214, 220, 221, 222, 223, 230, 231, 232, 24) étant commandé, dont le profil de température (f = dT (t)) est mesuré et comparé une courbe de chauffage de profil de température spécifique de l'élément chauffant en absence de glace (f0),
le système de dégivrage de pales de rotor d'une installation à énergie éolienne étant activé pour éliminer la glace en cas d'augmentation réduite de la température (f1) ou en cas de formation d'un plateau / d'une plage d'arrêt au cours de l'élévation de température, et
le système de dégivrage de pales de rotor d'une installation à énergie éolienne n'étant pas activé en cas de même augmentation et/ou de profil identique de température (f0).

2. Procédé de dégivrage de pales de rotor d'une installation éolienne selon la revendication 1, **caractérisé en ce que** durant le cycle de mesure, la résistance électrique est mesurée en tant que variable de commande à la place de la température (T), le profil de résistance étant comparé une courbe de chauffage de profil de résistance spécifique à l'élément chauffant en absence de glace.

3. Procédé de dégivrage de pales de rotor d'une installation éolienne selon la revendication 1, **caractérisé en ce que** des mesures sont faites par des capteurs environnementaux, de proximité, de pluie, de température et/ou d'humidité atmosphériques, et elles sont utilisées pour vérifier la réalisation de conditions environnementales prédéterminées (U).

4. Procédé de dégivrage de pales de rotor d'une installation éolienne selon la revendication 1 ou 2, **caractérisé en ce qu'**une base de données spécifique à l'installation est créée et/ou retravaillée durant le fonctionnement, les conditions environnementales (U) qui existaient en cas de détection de glace au cours d'un cycle de mesure étant stockées dans cette base de données.

5. Procédé de dégivrage de pales de rotor d'une installation éolienne selon la revendication 3, **caractérisé en ce qu**'en cas de réalisation de conditions environnementales (U) qui sont déjà associées dans la base de données à une détection de la glace, le système de dégivrage de pales de rotor d'une installation éolienne se produit est activé déjà lors de l'exécution du cycle de mesure.

6. Procédé de dégivrage de pales de rotor d'une installation éolienne selon la revendication 4, **caractérisé en ce qu**'en cas de non-détection de glace au cours du cycle de mesure, les conditions environnementales (U) associées à la présence de glace mémorisées dans la base de données sont corrigées et le système de dégivrage de pales de rotor d'une installation éolienne est immédiatement arrêté.

7. Procédé de dégivrage de pales de rotor d'une installation éolienne selon l'une des revendications précédentes, **caractérisé en ce que** lors de l'activation du système de dégivrage de pales de rotor d'une installation éolienne, des éléments chauffants auxiliaires (211, 212, 213, 214, 221, 222, 223, 231, 232) des zones de chauffage (21, 22, 23, 24), lesquels sont disposés autour d'un élément chauffant principal de grande surface (210, 220, 230), sont tout d'abord activés.

8. Procédé de dégivrage de pales de rotor d'une installation éolienne selon la revendication 6, **caractérisé en ce qu**'une activation des éléments chauffants principaux (210, 220, 230) a lieu après l'activation des éléments chauffants auxiliaires (211, 212, 213,214,221,222,223,231,232).

9. Procédé de dégivrage de pales de rotor d'une installation éolienne selon la revendication 6 ou 7, **caractérisé en ce que** les éléments chauffants auxiliaires (211, 212, 213, 214, 221, 222, 223, 231, 232) restent activés en continu durant un cycle de mesure tant que de la glace est détectée.

10. Procédé de dégivrage de pales de rotor d'une installation éolienne selon la revendication 7 ou 8, **caractérisé en ce que** les éléments chauffants principaux (210, 220, 230) sont activés de façon cyclique ou par intermittence tant que les éléments chauffants auxiliaires (211, 212, 213, 214, 221, 222 , 223, 231, 232) sont activés.

11. Procédé de dégivrage de pales de rotor d'une installation éolienne selon l'une des revendications précédentes, **caractérisé en ce que** le cycle de mesure est effectué sur un petit élément chauffant (211, 212, 213, 214, 221, 222, 223, 231, 232) ou sur un élément chauffant (24, 230, 231, 232) sur la pointe de la pale (113).

12. Système de chauffage de pales de rotor d'une installation à énergie éolienne sur une pale de rotor (11) d'une installation à énergie éolienne, comprenant au moins deux zones chauffantes (21, 22, 23) avec des éléments chauffants modulaires (210, 211, 212, 213, 214, 220, 221, 222, 223, 230, 231, 232, 24) qui sont commandés de manière cyclique et/ou continue, un système de commande pour activer les différentes zones chauffantes (21, 22, 23), des éléments chauffants principaux (210, 220, 230) et/ou des éléments chauffants auxiliaires (211, 212, 213, 214, 221, 222, 223, 231, 232), des capteurs environnementaux, de proximité, de pluie, de température et/ou d'humidité atmosphérique pour saisir des valeurs de commande, les capteurs étant exploités par le système de commande,
un élément chauffant principal de grande surface (210, 220, 230) étant prévu pour chaque zone chauffante, des éléments chauffants auxiliaires (211, 212, 213, 214, 221, 222, 223, 231, 232) étant disposés autour de cet élément chauffant principal (210, 220, 230), **caractérisé en ce que**
les éléments chauffants modulaires (210, 211, 212, 213, 214, 220, 221, 222, 223, 230, 231, 232, 24) sont constitués d'un matériau chauffant appliqué sur un film support
et
le matériau chauffant est un revêtement en vernis chauffant qui est muni de bandes de cuivre pour la mise en contact.

13. Système de chauffage de pales de rotor d'une installation à énergie éolienne selon la revendication 12, **caractérisé en ce que** le matériau chauffant sur le film support est couvert d'un film autocollant double-face et une grille parafoudre étant disposé dessus.

14. Système de chauffage de pales de rotor d'une installation à énergie éolienne selon la revendication 13, **caractérisé en ce qu**'une couche anti-érosion est prévue sur la grille parafoudre.

15. Système de chauffage de pales de rotor d'une installation à énergie éolienne selon la revendication 12, 13 ou 14, **caractérisé en ce que** le vernis chauffant est formé avec du graphite, du carbone en microstructures et/ou nanostructures.
